# EUROPEAN PATENT SPECIFICATION

(11) **EP 2 755 109 B1**
(45) Date of publication and mention of the grant of the patent: **16.03.2016**
(21) Application number: 13000094.6
(22) Date of filing: 09.01.2013
(51) Int. Cl.: G06F 1/26

(54) **Charging an electrical device via a data interface**
Laden einer elektrischen Vorrichtungen über eine Datenschnittstelle
Chargement d'un dispositif électrique par l'intermédiaire d'une interface de données

(43) Date of publication of application: 16.07.2014
(73) Proprietor: Sony Mobile Communications AB, 221 88 Lund (SE)
(72) Inventor: Berggren, Lars, 217 57 Malmö (SE); Rämmal, Jonas, 221 88 Lund (SE)
(74) Representative: Banzer, Hans-Jörg

(56) References cited:
- EP-A1- 2 498 167
- WO-A1-2004/112215
- WO-A1-2012/167677
- US-A1- 2011 016 341

## Description

### FIELD OF THE INVENTION

The present invention relates to a method for charging an electrical device with a charger via a data interface, for example an USB data interface. The present invention relates furthermore to an electrical device and a charger implementing the method for charging the electrical device with the charger via a data interface.

### BACKGROUND OF THE INVENTION

Electrical devices, especially mobile devices like mobile phones, personal digital assistants, mobile media player or mobile navigation systems, may comprise a rechargeable battery for energizing the device in operation. For charging the rechargeable battery, the device may comprise a connector to couple the device to a charger providing a charging energy from for example a power supply line. Furthermore, the electrical device may comprise a data interface for communicating with a computer via a wired connection, for example for uploading data or updating software. A commonly used data interface between a computer and an electrical device may comprise the so-called universal serial bus interface (USB).

For reducing the variety of battery charger interfaces for mobile devices, especially for mobile phones, regulations exist regarding the standardization of battery charger interfaces in several countries, for example China. For example, since June of 2007, all new mobile phones requesting network access approval in China will have to adopt a new battery charger interface standard described in the regulation. According to this regulation, it is required that the hand set provides a USB interface for battery charging and data transmission purpose. However, one of the limitations of this charging system via the USB connector is that the maximum allowed current on the power supply pin VBus of the USB interface is limited to 1.5 A. This may limit the charging speed and may increase the time for charging the rechargeable battery of the electric device.

US2011/0016341 discloses a USB interface providing pre-charge handshake communication.

Therefore, there is a need for providing a higher charging power to the electrical device via a data interface.

### SUMMARY OF THE INVENTION

According to the present invention, this object is achieved by a method for charging an electrical device with a charger via a data interface as defined in claim 1, an electrical device as defined in claim 10, a charger as defined in claim 13, and a combination of an electrical device and a charger as defined in claim 15. The dependent claims define preferred and advantageous embodiments of the invention. According to an aspect of the present invention, a method for charging an electrical device with a charger via a data interface is provided. The data interface, for example a universal serial bus interface (USB), comprises at least a first data line and a second data line for coupling the charger and the electrical device. According to the method, the charger and the electrical device are coupled through the first and second data lines. Then, predetermined information is exchanged between the charger and the electrical device via the first and second data lines. In response to the exchanged predetermined information, a charging current is supplied by the charger to at least one of the first and second data lines. In other words, the charger and the electrical device negotiate via the predetermined information, if the first and second data lines are to be used for transporting the charging current or not. Thus, a higher charging current can be transferred via existing electrical connections of the interface.

According to an embodiment, exchanging the predetermined information via the first and second data lines and supplying the charging current comprises the following steps. First, the first and second data lines are short-circuited at the charger, and the electrical device detects, if the first and second data lines are short-circuited. In response to the detected short-circuit at the charger, the first and second data lines are short-circuited at the electrical device. In other words, the electrical device sets up a short-circuit between the first and second data lines, if it has detected that the charger has short-circuited the first and second data lines. Next, the charger opens the short-circuit of the first and second data lines previously established by the charger, and detects, if the first and second data lines are short-circuited at the electrical device. In response to the detected short-circuit at the electrical device, the charger supplies a charging current to at least one of the first and second data lines. In other words, if the charger has detected that the electrical device has short-circuited the first and second data lines, the charger supplies a charging current to the first data line, the second data line or to both data lines.

In other embodiments, the exchange of predetermined information may comprise an exchange of digital or analog data transferred via the first and second data lines for negotiating, if the first and/or second data lines are to be used for transporting charging current.

The above-described method steps provide a simple protocol between the charger and the electrical device to agree on using the first and/or the second data line for transporting charging energy from the charger to the electrical device. If the electrical device does not support charging via the data lines or if the electrical device does not want to receive a charging current via the data lines, for example due to an application communicating data via the data lines, this is communicated to the charger via the above-described protocol and thus charging via the first and second data lines can be selectively performed or not, based on a current use case of the electrical device. If a charging current is supplied to at least one of the first and second data lines, an overall charging current supplied to the electrical device can be increased as additional lines and physical contacts of the interface are used. For example, in case of an USB interface, each connector pin of the USB connector may be allowed to carry a current of 1.5 A. Thus, the current provided from the charger to the electrical device may be at least doubled compared to using only the power supply pin VBus of the USB connector. This may allow a faster charging of a rechargeable battery of the electrical device.

According to an embodiment, detecting, if the first and second data lines are short-circuited may be performed as described in the following. A first electrical signal is supplied to the first data line and a second electrical signal is received at the second data line. Based on the first electrical signal and the second electrical signal, it is detected, if the first and second data lines are short-circuited. For example, the first and second electrical signals may be compared to detect, if a short-circuit between the first and second data line exists. The first electrical signal may comprise for example a voltage pulse of a predetermined length. These method steps may be performed by the electrical device or by the charger to perform the above-described short-circuit detections.

Additionally, the step of opening the short-circuit of the first and second data lines at the charger may be performed by the charger upon detecting that the mobile device supplies the first electrical signal to the first data line. In other words, the first electrical signal supplied to the first data line for detecting the short-circuit may be detected by the entity which provides the short-circuit to open the short-circuit. Thus, the above described method steps can be performed asynchronously without being synchronized to a specific timing.

According to an embodiment, the electrical device opens the short-circuit of the first and second data lines, for example upon recognizing that the charger is detecting the short-circuit between the first and second data lines. The electrical device may recognize this detection based on the charger supplying the first electrical signal to the first data line as described above. The electrical device may open the short-circuit of the first and second data lines before the charging current is supplied to the at least one of the first and second data lines. However, in case the charger supplies for example the charging current to only one of the first and second data lines or if the charger supplies the charging current to both data lines driving the charging current with the same voltage, the short-circuit at the electrical device does not need to be opened before supplying the charging current, but may be opened afterwards.

According to another embodiment, at the electrical device, the charging current received via at least one of the first and second data lines is coupled to a charging circuit of the electrical device for charging a battery of the electrical device. Thus, the charging current provided by the charger via at least one of the first and second data lines can be used for fast charging the battery of the electrical device.

According to another embodiment, at the electrical device, the first and second data lines are disconnected from a data processing circuit of the electrical device. Preferably, the first and second data lines are disconnected from the data processing circuit after detecting at the electrical device that the first and second data lines are short-circuited at the charger. Thus, it can be avoided that the charging current is provided to the data processing circuit of the electrical device, which may damage the data processing circuit. Furthermore, by decoupling the first and second data lines from the data processing circuit of the electrical device, the charging current can be provided with a voltage which may be higher than a voltage usually used on the data lines. For example, if the data lines are usually driven with a voltage of 5V, during providing the charging current via the first and second data lines, a voltage of 12V may be provided to the first and second data lines by the charger for increasing the amount of energy for charging the battery of the electrical device. Thus, the charging time for charging the rechargeable battery may be reduced.

According to another embodiment, the data interface comprises a power supply line for coupling the charger and the mobile device. In case of a USB connector, the power supply line may comprise for example the VBus line. According to the method, the short-circuit of the first and second data lines is opened at the electrical device after a predetermined amount of time and it is determined at the electrical device, if the charging current is provided on at least one of the first and second data lines. If the charging current is not provided at at least one of the first and second data lines, the electrical device couples the power supply line to a charging circuit of the electrical device. Thus, in case the charger does not provide a charging current on the first and second data lines, the rechargeable battery of the electrical device is charged with energy provided by the power supply line.

According to another embodiment, the data interface comprises the above-described power supply line for coupling the charger and the mobile device. At the charger, a predetermined voltage is supplied to the power supply line. Supplying the predetermined voltage to the power supply line may initiate the above-described method steps for negotiating if the first and second data lines are used for supplying charging current. Furthermore, as described in the embodiment above, the predetermined voltage supplied to the power supply line at the charger may be used by the electrical device for charging the rechargeable battery of the electrical device. Furthermore, the charger may supply a charging current to the power supply line, if the charger has detected that the first and second data lines were not short-circuited by the electrical device indicating that the electrical device does not want to receive a charging current via the first and second data lines.

According to another aspect of the present invention, an electrical device is provided. The electrical device comprises a data interface, a unit for providing an information exchange via the data interface, and a processing unit. The data interface comprises a first data line and a second data line. The processing unit is configured to exchange predetermined information via the first and second data lines, and to couple at least one of the first and second data lines to a charging circuit of the electrical device in response to the exchanged predetermined information.

According to an embodiment, the unit for providing the information exchange comprises a short-circuit detection unit and a short-circuit switch unit for facilitating the above described information exchange based on short-circuits on the data lines. The short-circuit detection unit is configured to detect a short-circuit between the first and second data lines. The short-circuit detection unit may detect a short-circuit between the first and second data lines by supplying an electrical signal to the first data line and by monitoring the second data line to see if the electrical signal provided to the first data line appears at the second data line. The short-circuit switch unit is configured to selectively short-circuit the first and second data lines. The processing unit is configured to detect, if the first and second data lines are short-circuited, and, if it has detected that the first and second data lines are short-circuited, to short-circuit the first and second data line with the short-circuit switch unit. Thus, the electrical device may be configured to perform the method steps of the embodiments of the above-described method. The electrical device may comprise for example a mobile phone, a personal digital assistant, a mobile music player, a tablet computer, a laptop computer, a notebook computer, or a navigation system. Due to the increased charging current which is possible by using the first and second data lines, rechargeable batteries of the above-listed battery powered devices can be recharged more rapidly.

According to an embodiment, the electrical device is configured to perform the method steps described above.

According to another aspect of the present invention, a charger is provided. The charger comprises an interface, a unit for providing an information exchange via the interface, and a processing unit. Although the charger may not need to provide data, the interface comprises at least a first data line and a second data line. The interface may be an interface which is compatible to a standard interface like a USB interface. The processing unit is configured to exchange predetermined information via the first and second data lines, and to supply a charging current to at least one of the first and second data lines in response to the exchanged predetermined information.

According to an embodiment, the unit for providing the information exchange comprises a short-circuit detection unit and a short-circuit switch unit. The short-circuit detection unit is configured to detect a short-circuit between the first and the second data lines and the short-circuit switch unit is configured to selectively short-circuit the first and second data lines. The processing unit is configured to short-circuit the first and second data lines, to open the short-circuit of the first and second data lines, to detect, if the first and second data lines are short-circuited and to supply a charging current to at least one of the first and second data lines in response to the detected short-circuit. The processing unit may furthermore be configured to sense if an electrical device coupled to the interface has detected the short-circuit provided by the charger between the first and second data lines. For example, the electrical device may issue a sensing signal to one of the first and second data lines for detecting the short-circuit provided by the charger. This sensing signal may be recognized by the processing unit of the charger and in response to this sensing signal the processing unit may open the short-circuit. Then, the processing unit monitors, if the first and second data lines are short-circuited by the electrical device, and supplies a charging current to at least one of the first and second data lines, if it has detected the short-circuit provided by the electrical device. Thus, a charging current can be provided to at least one of the first and second data lines which may be higher than a charging current which may be provided via a power supply connector pin of the interface and thus a rechargeable battery of the electrical device may be charged more rapidly. Furthermore, a higher charging voltage may be supplied to the at least one of the first and second data lines, thus increasing the charging energy provided to the electrical device.

According to an embodiment, the charger is configured to perform the method steps of the above-described method.

According to another aspect of the present invention, a combination of an electrical device as described above and a charger as described above is provided. The combination of the electrical device and the charger enables a rechargeable battery of the electrical device to be recharged with a high charging current and a high charging voltage in short time.

Although specific features described in the above summary and the following detailed description are described in connection with specific embodiments and aspects, it is to be understood that the features of the embodiments and aspects may be combined with each other unless specifically noted otherwise.

### BRIEF DESCRIPTION OF THE DRAWINGS

The invention will now be described in more detail with reference to the accompanying drawings.
Fig. 1 shows schematically a combination of a charger and an electrical device according to an embodiment of the present invention.
Fig. 2 shows method steps according to an embodiment of the present invention.
Fig. 3 shows a combination of a charger and an electrical device according to an embodiment of the present invention during negotiating the use of data lines for supplying a charging current.
Fig. 4 shows the combination of Fig. 3 during a further step of negotiation.
Fig. 5 shows a combination of a charger and an electrical device in which a charging current is delivered from the charger to the electrical device via data lines.

### DETAILED DESCRIPTION OF PREFERRED EMBODIMENTS

In the following, exemplary embodiments of the invention will be described in more detail. It has to be understood that the features of the various exemplary embodiments described herein may be combined with each other unless specifically noted otherwise. Same reference signs in the various drawings and the following description refer to similar or identical components.

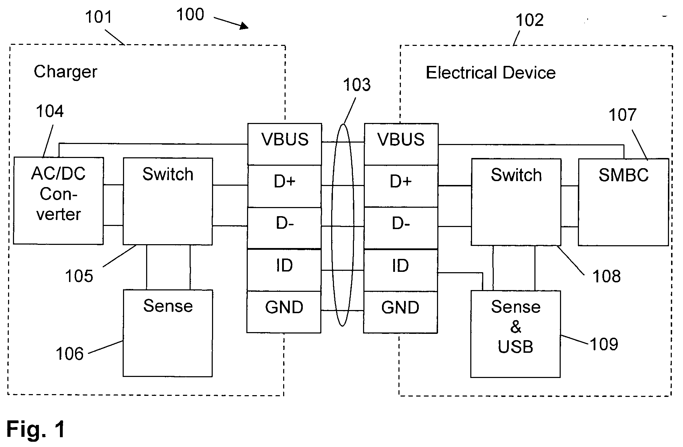

Fig. 1 shows schematically a combination 100 of a charger 101 and an electrical device 102. The electrical device may comprise for example a mobile phone comprising a (not shown) rechargeable battery for energizing the electrical device 102 in operation. For charging the rechargeable battery of the electrical device 102, the electrical device 102 may be coupled to the charger 101 via a data interface 103, comprising a plurality of lines or wires coupling the charger 101 to the electrical device 102. The data interface may comprise for example a universal serial bus interface, a so-called USB interface. The data interface 103 may comprise for example a power supply line VBus, a ground line GND, a first data line D+ and a second data line D-. Furthermore, the data interface may comprise an identification line ID, for example for distinguishing a type of connector or device.

The charger 101 comprises an AC/DC converter 104 for converting an alternating current from a main supply to a direct current adapted to be supplied as a charging current to the electrical device 102. The charger 101 comprises furthermore a switch unit 105 for selectively coupling the converter 104 to the data lines D+ and D- and to a sense unit 106. Furthermore, the switch unit 105 is configured to short-circuit the data lines D+ and D-. The charger 101 comprises additionally a (not shown) processing unit coupled to the switch unit 105 and the sensing unit 106.

The electrical device comprises a data interface for coupling the electrical 102 to the charger 101. The data interface may be the above-described USB interface. The data interface comprises a power supply connector VBus, a ground connector GND, a first data line connector D+ and a second data line connector D-. Furthermore, the data interface may comprise an identification connector ID. The electrical device 102 comprises furthermore a switched mode battery charger (SMBC) 107 which is coupled to the rechargeable battery of the electrical device. The battery charger 107 receives a charging current from the power supply connector VBus and/or from a switch unit 108 and provides the received charging current to the rechargeable battery for charging. The switch unit 108 is configured to selectively connect the data lines D+ and D- to the battery charger 107 or a sense and USB processing unit 109. The switch unit 108 is furthermore configured to selectively short-circuit the data lines D+ and D-. The electrical device comprises furthermore a (not shown) processing unit adapted to control the switch unit 108 and to receive information from the sense unit 109.

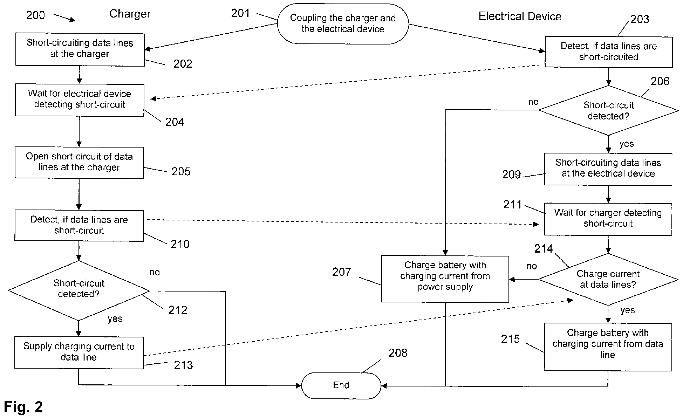

Operation of the combination 100 of the charger 101 and the electrical device 102 will be described in more detail with reference to Figs. 2-5.

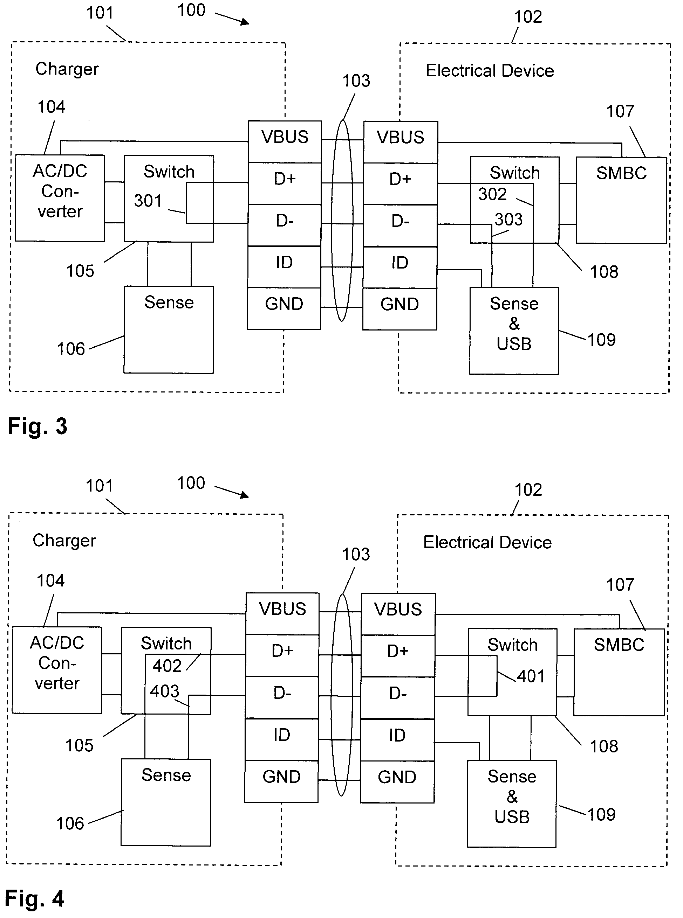

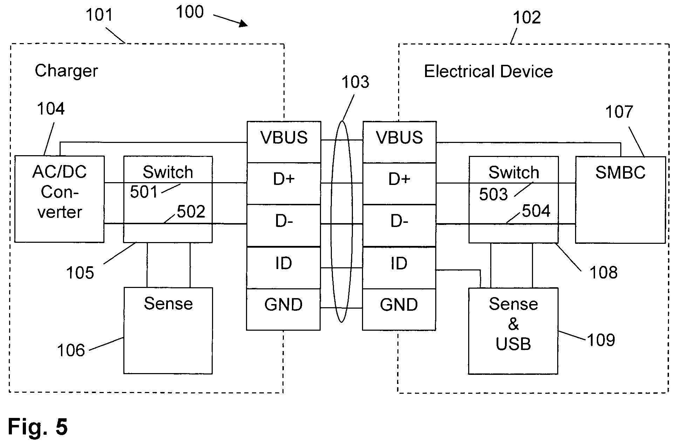

Fig. 2 shows a flow chart 200 defining method steps performed by the charger 101 and the electrical device 102 when the charger 101 and the electrical device 102 are coupled to each other in step 201. In the charger 101, the switch unit 105 is controlled by the processing unit such that the switch unit 105 short-circuits the data lines D+ and D- (step 202). The short-circuit 301 in switch unit 105 is shown in Fig. 3. Upon coupling of the charger 101 to the electrical device 102, the electrical device 102 starts detecting, in step 203, if the data lines D+ and D- are short-circuited in the charger. For this the switch unit 108 provides the connections 302 and 303 for coupling the data lines D+ and D- to the sensing unit 109 of the electrical device 102. The coupling between the charger 101 and the electrical device 102 may be recognized by the electrical device 102 by monitoring the VBus pin at the data interface 103, which is supplied with a power supply voltage upon coupling the charger 101 to the electrical device 102. The electrical device 102 may detect or sense the short-circuit of the data lines D+ and D- by supplying an electrical sensing signal to one of the data lines and monitoring the other of the data lines to see if the supplied sensing signal is received. The signal may comprise for example a voltage pulse of a predefined length. The charger 201 may also monitor the data lines for this electrical pulse. If the charger 101 detects in step 204 that the electrical device 102 has sent the sensing signal to at least one of the data lines, the charger opens in step 205 the short-circuit 301 of the data lines and couples the data lines to the sensing unit 106 as shown in Fig. 4. When the electrical device 102 has detected the short-circuit in step 206, the electrical device 102 configures the switch unit 108 such that the data lines D+ and D- are short-circuited by the switch unit (step 209). If in step 206 no short-circuit between the data lines D+ and D- has been detected, the electrical device 102 continues operating in step 207 and charges the battery only with a charging current supplied from the power supply pin VBus. In step 210 the charger 101 detects with the sensing unit 106 if the data lines D+ and D- are short-circuited by the short-circuit 401 in the switch unit 108 of the electrical device 102. For this, the switch unit 105 provides connections 402 and 403 coupling the data lines D+ and D- to the sensing unit 106. The sensing unit 106 may detect the short-circuit 401 in the switch unit 108 by supplying a sensing signal to one of the data lines and monitoring the other data line for the sensing signal. The electrical device 102 may also monitor the data lines D+ and D- for the sensing signal and may open the short-circuit 401 when it has detected that the charger has sent out the sensing signal. If the sensing unit 106 of the charger 101 has detected the short-circuit 401 in step 212, the processing unit of the charger 101 reconfigures the switch unit 105 such that a charging current from the converter 104 is supplied to the data lines D+ and D- by establishing connections 501 and 502 between the converter 104 and D+ and D- as shown in Fig. 5. If the charger 101 does not detect the short-circuit 401 in step 212, no charging current is supplied via the switch unit 105 to the data lines D+ and D- and the process ends in step 208. The electrical device 102 detects in steps 214, if a charging current is supplied via at least one of the data lines D+ and D-. If the charging current is detected, the switch unit 108 establishes connections 503 and 504 coupling the data lines D+ and D- to the switched mode battery charger 107 as shown in Fig. 5. If no charging current is detected at the data lines D+ and D-, the battery charger 107 is supplied with charging current from the power supply VBus only in step 207.

In the configuration shown in Fig. 5, the data lines D+ and D- are used for supplying a charging current from the charger 101 to the electrical device 102. The charging current via the data lines D+ and D- may be provided additionally to a charging current provided via the supply voltage VBus. Furthermore, the charging current supplied via the data lines D+ and D- may be provided using a higher voltage than the power supply voltage provided at VBus. For example, a charging current with a voltage of 12 Volts may be provided at the data lines D+ and D-, whereas the power supply at VBus has a voltage of 5 Volts. The charging current via the data lines D+ and D- may comprise for example 1.5 A per data line resulting in a charging current of 3 A at 12 Volts.

For protecting a processing entity configured to receive data via the data lines D+ and D- in a data transmission operation of the data interface 103 from high currents and voltages, the switch unit 108 may decouple this processing entity from the data lines D+ and D- when signaling the charger via the shortcut 401 that the electrical device wants to receive a charging current via data lines D+ and D-. In step 209 additionally a timer may be started and in step 215 the electrical device 102 may wait for a charging current appearing at the data lines D+ and D- or for the timer to expire. When the timer expires before a charging current is received at D+ or D-, the electrical device continues operation in step 207 and charges the battery from the power supply connector VBus only.

While exemplary embodiments have been described above, various modifications may be implemented in other embodiments. For example, the above-described method is not restricted to a USB interface, but may be realized with any other kind of data interface comprising at least two data lines. Furthermore, after having negotiated that the data lines D+ and D- may be used for transporting the charging current, a polarity of a charging current provided at the data lines D+ and D- may comprise for example a positive voltage of for example 12 Volts at one of the data lines and ground at the other data line or a positive voltage may be provided to both data lines. Concerning a return path of the charging current, a switching of additional lines may be needed. For example, the ID line of the USB interface may be used as an additional ground as a charging current return path.

## Claims

1. A method for charging an electrical device with a charger via a data interface, the data interface (103) comprising at least a first data line (D+) and a second data line (D-) for coupling the charger (101) and the electrical device (102), the method comprising:
- coupling the charger (101) and the electrical device (102) through the first and second data lines (D+, D-), and
- exchanging predetermined information between the charger (101) and the electrical device (102) via the first and second data lines,
**characterized by**
- supplying a charging current to at least one of the first and second data lines (D+, D-) by the charger (101) in response to the exchanged predetermined information.

2. The method according to claim 1,
wherein exchanging the predetermined information between the charger (101) and the electrical device (102) via the first and second data lines (D+, D-) comprises:
- short-circuiting (301) the first and second data lines (D+, D-) at the charger (101),
- detecting at the electrical device (102), if the first and second data lines (D+, D-) are short-circuited,
- short-circuiting (401) the first and second data lines (D+, D-) at the electrical device (102) in response to the detected short-circuit (301) at the charger (101),
- opening the short-circuit (301) of the first and second data lines (D+, D-) at the charger (101), and
- detecting at the charger (101), if the first and second data lines (D+, D-) are short-circuited at the electrical device (102), and
wherein supplying the charging current to at least one of the first and second data lines (D+, D-) by the charger (101) in response to the exchanged predetermined information comprises:
- supplying the charging current to at least one of the first and second data lines (D+, D-) by the charger (101) in response to the detected short-circuit (401) at the electrical device (102).

3. The method according to claim 2, wherein detecting, if the first and second data lines (D+, D-) are short-circuited, comprises:
- supplying a first electrical signal to the first data line (D+),
- receiving a second electrical signal at the second data line (D-), and
- detecting, if the first and second data lines (D+, D-) are short-circuited, based on the first electrical signal and the second electrical signal.

4. The method according to claim 2 or 3, further comprising:
opening the short-circuit (401) of the first and second data lines at the electrical device (102).

5. The method according to any one of claims 2-4, further comprising:
- disconnecting, at the electrical device (102), the first and second data lines (D+, D-) from a data processing circuit (109) of the electrical device (102) after detecting at the electrical device (102) that the first and second data lines are short-circuited at the charger (101).

6. The method according to any one of claims 2-5, wherein the data interface (103) comprises a power supply line (VBus) for coupling the charger (101) and the electrical device (102), the method further comprising:
- after a predetermined amount of time, opening the short-circuit (401) of the first and second data lines (D+, D-) at the electrical device (102) and determining at the electrical device (102), if the charging current is provided on at least one of the first and second data lines (D+, D-), and,
- if the charging current is not supplied, coupling, at the electrical device (102), the power supply line (VBus) to a charging circuit (107) of the electrical device (102).

7. The method according to any one of claims 2-6, wherein the data interface (103) comprises a power supply line (VBus) for coupling the charger (101) and the electrical device (102), the method further comprising
- supplying a predetermined voltage to the power supply line (VBus) at the charger (101).

8. The method according claim 7, further comprising:
- supplying a charging current to the power supply line (VBus) by the charger (101) if the charger (101) has detected that the first and second data lines (D+, D-) were not short-circuited.

9. The method according to any one of the preceding claims, further comprising:
- coupling (503, 504), at the electrical device (102), the charging current received via at least one of the first and second data lines (D+, D-) to a charging circuit (107) of the electrical device (102) for charging a battery of the electrical device (102).

10. An electrical device, comprising:
- a data interface (103) comprising at least a first data line (D+) and a second data line (D-),
- a unit (108, 109) configured to provide an information exchange via the first and second data lines (D+, D-), and
- a processing unit configured to exchange predetermined information via the first and second data lines (D+, D-),
**characterized in that** the processing unit is configured to couple at least one of the first and second data lines (D+, D-) to a charging circuit (107) of the electrical device (102) in response to the exchanged predetermined information for receiving a charging current via the at least one of the first and second data lines (D+, D-) at the charging circuit (107) for charging a battery of the electrical device (102).

11. The electrical device according to claim 10, wherein the electrical device (102) is configured to perform the method according to any one of claims 1-9.

12. The electrical device according to claim 10 or 11, wherein the electrical device (102) comprises at least one device of a group consisting of a mobile phone, a personal digital assistant, a mobile music player, a tablet computer, a laptop computer, a notebook computer, and a navigation system.

13. A charger, comprising
- an interface (103) comprising at least a first data line (D+) and a second data line (D-),
- a unit (105, 106) configured to provide an information exchange via the first and second data lines (D+, D-), and
- a processing unit configured to exchange predetermined information via the first and second data lines (D+, D-),
**characterized in that** the processing unit is configured to supply a charging current to at least one of the first and second data lines (D+, D-) in response to the exchanged predetermined information.

14. The charger according to claim 13, wherein the charger (101) is configured to perform the method according to any one of claims 1-9.

15. A combination of an electrical device (102) according to any one of claims 10-12 and a charger (101) according to claim 13 or claim 14.

## Patentansprüche

1. Verfahren zum Laden einer elektrischen Vorrichtung mit einer Ladevorrichtung über eine Datenschnittstelle, wobei die Datenschnittstelle (103) zumindest eine erste Datenleitung (D+) und eine zweite Datenleitung (D-) zum Koppeln der Ladevorrichtung (101) und der elektrischen Vorrichtung (102) umfasst, wobei das Verfahren umfasst:
- Koppeln der Ladevorrichtung (101) und der elektrischen Vorrichtung (102) über die erste und zweite Datenleitung (D+, D-), und
- Austauschen einer vorbestimmten Information zwischen der Ladevorrichtung (101) und der elektrischen Vorrichtung (102) über die erste und zweite Datenleitung,
**gekennzeichnet durch**
- Zuführen eines Ladestroms zu wenigstens einer der ersten und zweiten Datenleitung (D+, D-) **durch** die Ladevorrichtung (101) in Abhängigkeit von der ausgetauschten vorbestimmten Information.

2. Verfahren nach Anspruch 1,
wobei das Austauschen der vorbestimmten Information zwischen der Ladevorrichtung (101) und der elektrischen Vorrichtung (102) über die erste und zweite Datenleitung (D+, D-) umfasst:
- Kurzschließen (301) der ersten und zweiten Datenleitung (D+, D-) an der Ladevorrichtung (101),
- Erfassen an der elektrischen Vorrichtung (102), ob die erste und zweite Datenleitung (D+, D-) kurzgeschlossen sind,
- Kurzschließen (401) der ersten und zweiten Datenleitung (D+, D-) an der elektrischen Vorrichtung (102) in Abhängigkeit von dem erfassten Kurzschluss (301) an der Ladevorrichtung (101),
- Öffnen des Kurzschlusses (301) der ersten und zweiten Datenleitung (D+, D-) an der Ladevorrichtung (101), und
- Erfassen an der Ladevorrichtung (102), ob die erste und zweite Datenleitung (D+, D-) an der elektrischen Vorrichtung (102) kurzgeschlossen sind, und
wobei das Zuführen des Ladestroms zu der wenigstens einen der ersten und zweiten Datenleitung (D+, D-) durch die Ladevorrichtung (101) in Abhängigkeit von der ausgetauschten vorbestimmten Informationen umfasst:
- Zuführen des Ladestroms zu der wenigstens einen der ersten und zweiten Datenleitung (D+, D-) durch die Ladevorrichtung (101) in Abhängigkeit von dem erfassten Kurzschluss (401) an der elektrischen Vorrichtung (102).

3. Verfahren nach Anspruch 2, wobei das Erfassen, ob die erste und zweite Datenleitung (D+, D-) kurzgeschlossen sind, umfasst:
- Zuführen eines ersten elektrischen Signals zu der ersten Datenleitung (D+),
- Empfangen eines zweiten elektrischen Signals an der zweiten Datenleitung (D-), und
- Erfassen, ob die erste und zweite Datenleitung (D-, D-) kurzgeschlossen sind, auf der Grundlage des ersten elektrischen Signals und des zweiten elektrischen Signals.

4. Verfahren nach Anspruch 2 oder 3, ferner umfassend:
Öffnen des Kurzschlusses (401) der ersten und zweiten Datenleitung an der elektrischen Vorrichtung (102).

5. Verfahren nach einem der Ansprüche 2-4, ferner umfassend:
- Trennen, an der elektrischen Vorrichtung (102), der ersten und zweiten Datenleitung (D+, D-) von einem Datenverarbeitungsschaltkreis (109) der elektrischen Vorrichtung (102) nach einem Erfassen an der elektrischen Vorrichtung (102), dass die erste und zweite Datenleitung an der Ladevorrichtung (101) kurzgeschlossen sind.

6. Verfahren nach einem der Ansprüche 2-5, wobei die Datenschnittstelle (103) eine Stromversorgungsleitung (VBus) zum Koppeln der Ladevorrichtung (101) und der elektrischen Vorrichtung (102) umfasst, wobei das Verfahren ferner umfasst:
- nach einer vorbestimmten Zeitdauer: Öffnen des Kurzschlusses (401) der ersten und zweiten Datenleitung (D+, D-) an der elektrischen Vorrichtung (102) und Bestimmen an der elektrischen Vorrichtung (102), ob der Ladestrom an der ersten oder zweiten Datenleitung (D+, D-) bereitgestellt wird, und
- wenn der Ladestrom nicht bereitgestellt wird: Koppeln der Stromversorgungsleitung (VBus) mit einem Ladeschaltkreis (107) der elektrischen Vorrichtung (102) an der elektrischen Vorrichtung (102).

7. Verfahren nach einem der Ansprüche 2-6, wobei die Datenschnittstelle (103) eine Stromversorgungsleitung (VBus) zum Koppeln der Ladevorrichtung (101) und der elektrischen Vorrichtung (102) umfasst, wobei das Verfahren ferner umfasst
- Zuführen einer vorbestimmten Spannung zu der Stromversorgungsleitung (VBus) an der Ladevorrichtung (101).

8. Verfahren nach Anspruch 7, ferner umfassend:
- Zuführen eines Ladestroms zu der Stromversorgungsleitung (VBus) durch die Ladevorrichtung (101), wenn die Ladevorrichtung (101) erfasst hat, dass die erste und zweite Datenleitung (D+, D-) nicht kurzgeschlossen sind.

9. Verfahren nach einem der vorhergehenden Ansprüche, ferner umfassend:
- Koppeln (503, 504), an der elektrischen Vorrichtung (102), des über die wenigstens eine der ersten und zweiten Datenleitung (D+, D-) empfangenen Ladestroms mit einem Ladeschaltkreis (107) der elektrischen Vorrichtung (102) zum Laden einer Batterie der elektrischen Vorrichtung (102).

10. Elektrische Vorrichtung, umfassend:
- eine Datenschnittstelle (103) umfassend zumindest eine erste Datenleitung (D+) und eine zweite Datenleitung (D-),
- eine Einheit (108,109), welche ausgestaltet ist, einen Informationsaustausch über die erste und zweite Datenleitung (D+, D-) bereitzustellen, und
- eine Verarbeitungseinheit, welche ausgestaltet ist, eine vorbestimmte Information über die erste und zweite Datenleitung (D+, D-) auszutauschen,
**dadurch gekennzeichnet, dass** die Verarbeitungseinheit ausgestaltet ist, die erste und/oder zweite Datenleitung (D+, D-) mit einem Ladeschaltkreis (107) der elektrischen Vorrichtung (102) abhängig von der ausgetauschten vorbestimmten Information zu koppeln, um einen Ladestrom über die erste und/oder zweite Datenleitung (D+, D-) an dem Ladeschaltkreis (107) zum Laden einer Batterie der elektrischen Vorrichtung (102) zu empfangen.

11. Elektrische Vorrichtung nach Anspruch 10, wobei die elektrische Vorrichtung (102) ausgestaltet ist, das Verfahren nach einem der Ansprüche 1-9 auszuführen.

12. Elektrische Vorrichtung nach Anspruch 10 oder 11, wobei die elektrische Vorrichtung (102) mindestens eine Vorrichtung aus einer Gruppe umfasst, welche aus einem Mobiltelefon, einem persönlichen digitalen Assistenten, einem mobilen Musikwiedergabegerät, einem Tablet-Computer, einem Laptop-Computer, einem Notebook-Computer und einem Navigationssystem besteht.

13. Ladevorrichtung, umfassend:
- eine Schnittstelle (103), welche zumindest eine erste Datenleitung (D+) und eine zweite Datenleitung (D-) umfasst,
- eine Einheit (105,106), welche ausgestaltet ist, einen Informationsaustausch über die erste und zweite Datenleitung (D+, D-) bereitzustellen, und
- eine Verarbeitungseinheit, welche ausgestaltet ist, eine vorbestimmte Information über die erste und zweite Datenleitung (D+, D-) auszutauschen,
**dadurch gekennzeichnet, dass** die Verarbeitungseinheit ausgestaltet ist, einen Ladestrom zu der ersten und/oder zweiten Datenleitung (D+, D-) abhängig von der ausgetauschten vorbestimmten Information zuzuführen.

14. Ladevorrichtung nach Anspruch 13, wobei die Ladevorrichtung (101) ausgestaltet ist, das Verfahren nach einem der Ansprüche 1-9 auszuführen.

15. Kombination aus einer elektrischen Vorrichtung (102) nach einem der Ansprüche 10-12 und einer Ladevorrichtung (101) nach Anspruch 13 oder Anspruch 14.

## Revendications

1. Procédé pour charger un dispositif électrique avec un chargeur par l'intermédiaire d'une interface de données, l'interface de données (103) comprenant au moins une première ligne de données (D+) et une deuxième ligne de données (D-) pour coupler le chargeur (101) et le dispositif électrique (102), le procédé comprenant :
- le couplage du chargeur (101) et du dispositif électrique (102) par l'intermédiaire des première et deuxième lignes de données (D+, D-), et
- l'échange d'une information prédéterminée entre le chargeur (101) et le dispositif électrique (102) par l'intermédiaire des première et deuxième lignes de données, **caractérisé par** :
- la délivrance d'un courant de charge à au moins l'une des première et deuxième lignes de données (D+, D-) par le chargeur (101) en réponse à l'information prédéterminée échangée.

2. Procédé selon la revendication 1,
dans lequel l'échange de l'information prédéterminée entre le chargeur (101) et le dispositif électrique (102) par l'intermédiaire des première et deuxième ligne de données (D+, D-) comprend :
- la mise en court-circuit (301) des première et deuxième lignes de données (D+, D-) au niveau du chargeur (101),
- la détection, au niveau du dispositif électrique (102), du fait que les première et deuxième lignes de données (D+, D-) sont en court-circuit,
- la mise en court-circuit (401) des première et deuxième lignes de données (D+, D-) au niveau du dispositif électrique (102) en réponse au court-circuit détecté (301) au niveau du chargeur (101),
- l'ouverture du court-circuit (320) des première et deuxième lignes de données (D+, D-) au niveau du chargeur (101), et
- la détection, au niveau du chargeur (101), du fait que les première et deuxième lignes de données (D+, D-) sont en court-circuit au niveau du dispositif électrique (102), et
dans lequel la délivrance du courant de charge à au moins l'une des première et deuxième lignes de données (D+, D-) par le chargeur (101) en réponse à l'information prédéterminée échangée comprend :
- la délivrance du courant de charge à au moins l'une des première et deuxième lignes de données (D+, D-) par le chargeur (101) en réponse au court-circuit détecté (401) au niveau du dispositif électrique (102).

3. Procédé selon la revendication 2, dans lequel la détection du fait que les première et deuxième lignes de données (D+, D-) sont court-circuitées comprend :
- la délivrance d'un premier signal électrique à la première ligne de données (D+),
- la réception d'un deuxième signal électrique au niveau de la deuxième ligne de données (D-), et
- la détection du fait que les première et deuxième lignes de données (D+, D-) sont court-circuitées, en fonction du premier signal électrique et du deuxième signal électrique.

4. Procédé selon la revendication 2 ou 3, comprenant de plus :
l'ouverture du court-circuit (401) des première et deuxième lignes de données au niveau du dispositif électrique (102).

5. Procédé selon l'une quelconque des revendications 2 à 4, comprenant de plus :
- la déconnexion, au niveau du dispositif électrique (102), des première et deuxième lignes de données (D+, D-) à partir d'un circuit de traitement de données (109) du dispositif électrique (102), après la détection au niveau du dispositif électrique (102) du fait que les première et deuxième lignes de données sont court-circuitées au niveau du chargeur (101).

6. Procédé selon l'une quelconque des revendications 2 à 5, dans lequel l'interface de données (103) comprend une ligne d'alimentation (VBus) pour coupler le chargeur (101) et le dispositif électrique (102), le procédé comprenant de plus :
- après une quantité de temps prédéterminée, l'ouverture du court-circuit (401) des première et deuxième lignes de données (D+, D-) au niveau du dispositif électrique (102), et la détermination, au niveau du dispositif électrique (102), du fait que le courant de charge est délivré sur au moins l'une des première et deuxième lignes de données (D+, D-), et
- si le courant de charge n'est pas délivré, le couplage, au niveau du dispositif électrique (102), de la ligne d'alimentation (VBus) à un circuit de charge (107) du dispositif électrique (102).

7. Procédé selon l'une quelconque des revendications 2 à 6, dans lequel l'interface de données (103) comprend une ligne d'alimentation (VBus) pour coupler le chargeur (101) et le dispositif électrique (102), le procédé comprenant de plus :
- la délivrance d'une tension prédéterminée à ligne d'alimentation (VBus) au niveau du chargeur (101).

8. Procédé selon la revendication 7, comprenant de plus :
- la délivrance d'un courant de charge à la ligne d'alimentation (VBus) par le chargeur (101) si le chargeur (101) a détecté que les première et deuxième lignes de données (D+, D-) ne sont pas en court-circuit.

9. Procédé selon l'une quelconque des revendications précédentes, comprenant de plus :
- le couplage (503, 504), au niveau du dispositif électrique (102), du courant de charge reçu par l'intermédiaire d'au moins l'une des première et deuxième lignes de données (D+, D-) à un circuit de charge (107) du dispositif électrique (102) pour charger une batterie du dispositif électrique (102).

10. Dispositif électrique, comprenant :
- une interface de données (103), comprenant au moins une première ligne de données (D+) et une deuxième ligne de données (D-),
- une unité (108, 109) configurée pour réaliser un échange d'information par l'intermédiaire des première et deuxième lignes de données (D+, D-), et
- une unité de traitement, configurée pour échanger une information prédéterminée par l'intermédiaire des première et deuxième lignes de données (D+, D-),
**caractérisé en ce que** l'unité de traitement est configurée pour coupler au moins l'une des première et deuxième lignes de données (D+, D-) à un circuit de charge (107) du dispositif électrique (102) en réponse à l'information prédéterminée échangée pour recevoir un courant de charge par l'intermédiaire de l'au moins une ligne parmi les première et deuxième lignes de données (D+, D-) au niveau du circuit de charge (107) pour charger une batterie du dispositif électrique (102).

11. Dispositif électrique selon la revendication 10, le dispositif électrique (102) étant configuré pour mettre en oeuvre le procédé selon l'une quelconque des revendications 1 à 9.

12. Dispositif électrique selon la revendication 10 ou 11, le dispositif électrique (102) consistant en au moins un dispositif d'un groupe comprenant un téléphone portable, un assistant numérique personnel, un lecteur de musique mobile, un ordinateur du type tablette, un ordinateur portable, un ordinateur de poche, et un système de navigation.

13. Chargeur, comprenant :
- une interface (103) comprenant au moins une première ligne de données (D+) et une deuxième ligne de données (D-),
- une unité (105, 106), configurée pour réaliser un échange d'information par l'intermédiaire des première et deuxième lignes de données (D+, D-), et
- une unité de traitement, configurée pour échanger une information prédéterminée par l'intermédiaire des première et deuxième lignes de données (D+, D-),
**caractérisé en ce que** l'unité de traitement est configurée pour délivrer un courant de charge à au moins l'une des première et deuxième lignes de données (D+, D-) en réponse à l'information prédéterminée échangée.

14. Chargeur selon la revendication 13, le chargeur (101) étant configuré pour mettre en oeuvre le procédé selon l'une quelconque des revendications 1 à 9.

15. Combinaison d'un dispositif électrique (102) selon l'une quelconque des revendications 10 à 12 et d'un chargeur (101) selon la revendication 13 ou la revendication 14.
